# EUROPÄISCHE PATENTSCHRIFT

(11) **EP 1 436 809 B1**
(45) Veröffentlichungstag und Bekanntmachung des Hinweises auf die Patenterteilung: **18.10.2006**
(21) Anmeldenummer: 02776802.7
(22) Anmeldetag: 11.10.2002
(51) Int. Cl.: G11B 7/24, G11B 7/007

(54) **SCHEIBENFÖRMIGER OPTISCHER DATENTRÄGER MIT SOWOHL EINER CD- ALS AUCH EINER DVD-INFORMATIONSSCHICHT**
DISK-SHAPED OPTICAL DATA CARRIER WITH A CD AND DVD INFORMATION LAYER
SUPPORT DE DONNEES OPTIQUE SOUS FORME DE DISQUE COMPRENANT A LA FOIS UNE COUCHE D'INFORMATIONS DE CD ET UNE COUCHE D'INFORMATIONS DE DVD

(30) Priorität: 11.10.2001 DE 10150025
(43) Veröffentlichungstag der Anmeldung: 14.07.2004
(73) Patentinhaber: Dierks, Dieter, 50259 Pulheim (DE)
(72) Erfinder: Dierks, Dieter, 50259 Pulheim (DE)
(74) Vertreter: Bauer, Wulf
(86) Internationale Anmeldenummer: PCT/DE2002/003828
(87) Internationale Veröffentlichungsnummer: WO 2003/034418

(56) Entgegenhaltungen:
- EP-A- 0 737 966
- EP-A- 0 814 469
- EP-A- 0 899 723
- WO-A-98/00842
- DE-U- 29 914 540
- US-A- 4 450 553

## Beschreibung

Die Erfindung bezieht sich auf einen scheibenförmigen optischen Datenträger, nämlich eine zweiseitige Hybrid-CD-DVD, nach dem Oberbegriff des Patentanspruchs 1.

Der Datenträger der eingangs genannten Art ist bekannt aus der PCT/US 98/03844 oder DE 299 14 540 U1. Er setzt sich zusammen aus einer halben DVD nach dem DVD-Standard und einer CD. Typischerweise hat die halbe DVD eine Dicke von 0,6 mm, die Dicke der CD liegt bei 1,2 mm. Zusammen genommen gibt dies 1,8 mm. Dies ist außerhalb der Norm, die vorschreibt, dass CDs und DVDs nicht dicker als 1,5 mm sein dürfen. Um diese Gesamtdicke zu erreichen wird die CD etwas dünner ausgeführt, wie auch aus der PCT-Schrift in Fig. 4 zu erkennen ist. Gegebenenfalls kann auch die DVD geringfügig dünner als 0,6 mm ausgeführt sein.

Wenn die CD dünner als 1,2 mm ausgeführt ist, sind die optischen Verhältnisse nicht mehr perfekt. Das Leselicht wird nicht mehr exakt auf der CD-Reflektionsschicht fokussiert. Den hierdurch bewirkten Nachteil kann man dadurch kompensieren, dass man die optische Struktur, die aus Pits und Land besteht, so groß wie innerhalb der Norm zulässig ausbildet. Dies bedeutet aber, dass die CD nur mit einem Gesamtspeicherinhalt im unteren Bereich der Norm beschrieben werden kann, beispielsweise nur etwa 500 MB. Eine vollwertige CD mit der Datenmenge, die bei einer einzelnen CD erreichbar ist, ist bei der Hybrid-CD-DVD nach dem Stand der Technik nicht erreichbar. Dies ist nachteilig.

Weiterhin nachteilig ist, dass eine Gesamtdicke, die mit Sicherheit unter 1,5 mm und damit innerhalb der Norm liegt, nur schwierig erreichbar ist. Tatsächlich hergestellte Hybrid-CD-DVDs haben eine Dicke, die ganz geringfügig oberhalb von 1,5 mm liegt. Auch dies ist nachteilig.

Aus WO-A-9800842 ist eine einseitige Hybrid-CD-DVD bekannt, die eine erste Oberfläche 4a, eine zweite Oberfläche 10a, eine CD-Informationsschicht 7b, auf der Daten nach den CD-Standard gespeichert sind und die eine CD-Pit-Struktur und eine CD-Reflektionsschicht 9 aufweist, und die eine DVD-Informationsschicht 4b hat, auf der Daten nach dem DVD-Standard gespeichert sind und die eine DVD-Pit-Struktur und eine DVD-Reflektionsschicht 6a aufweist, dabei tritt sowohl CD-Leselicht, das die CD-Informationsschicht erfasst, als auch DVD-Leselicht, welches die DVD-Informationsschicht erfasst, durch die erste Oberfläche 4a, die als einzige optische Oberfläche ausgebildet ist, während die zweite Oberfläche 10a mit einer Schutzschicht 10 belegt ist. Die DVD-Informationsschicht 4b befindet sich in der Mitte zwischen der ersten und der zweiten Oberfläche. Die CD-Informationsschicht befindet sich in unmittelbarer Nähe der zweiten, mit der Schutzschicht versehenen Oberfläche 10a. Das CD-Leselicht, welches die CD-Informationsschicht 7b liest, läuft auf dem Hinweg und dem Rückweg durch die DVD-Informationsschicht 4b hindurch, um die Anteile an reflektierem Licht möglichst groß zu halten, ist die DVD-Informationsschicht so durchlässig wie möglich für das CD-Leselicht.

Aus US-A-4450553 sind mehrlagige optische Informationsdisketten bekannt, die mehrere Informationsschichten gleicher Art aufweisen. Sie werden mit Lasern einer Wellenlänge ausgelesen. Es werden spezielle Abspielgeräte benötigt.

Aus EP-A-0737966 ist eine einseitige Hybridstruktur bekannt, bei der eine CD und eine DVD-ähnliche Informationsschicht durch eine Oberfläche hindurch gelesen werden. Hierfür werden spezielle Abspielgeräte benötigt.

Hier setzt nun die Erfindung ein. Sie hat es sich zur Aufgabe gemacht, die zweiseitige Hybrid-CD-DVD, der eingangs genannten Art dahingehend zu verbessern, dass sie einerseits eine deutlich dünnere Gesamtdicke als 1,5 mm, beispielsweise weniger als 1,3 mm aufweist und andererseits es zudem möglich ist, die CD-Schicht mit der maximal möglichen Datenmenge zu beschreiben.

Ausgehend von dem scheibenförmigen optischen Datenträger der eingangs genannten Art wird diese Aufgabe dadurch gelöst, durch die Merkmale des Anspruchs 1.

Im Gegensatz zu dem Datenträger nach der PCT/US 98/03844 sind bei dem erfindungsgemäßen Datenträger der CD-Teil und der DVD-Teil miteinander bzw. ineinander verschachtelt. Während der Datenträger nach dem Stand der Technik an der Verklebungsstelle zwischen CD-Teil und DVD-Teil getrennt werden könnte und man dann zwei dünnere Teilscheiben erhielte, die beide ansich voll funktionsfähig sind, nämlich die eine als (halbe) DVD und die andere als CD, ist dies bei der Hybrid-CD-DVD nach der Erfindung nicht möglich. Bei dieser durchtritt das die DVD-Informationsschicht erfassende Leselicht die CD-Informationsschicht beim Hinweg und beim Rückweg. Gleiches gilt für das Lesen der CD-Informationsschicht. Das Leselicht durchtritt auf dem Hinweg und auf dem Rückweg die DVD-Informationsschicht.

Beibehalten wird jedoch das Grundprinzip des scheibenförmigen optischen Datenträgers nach dem Stand der Technik: Um von einem Lesen der DVD-Informationsschicht zu einem Lesen der CD-Informationsschicht zu wechseln, muss der Datenträger gedreht werden.

Aus dem Stand der Technik sind Hybrid-DVD-CDs bekannt, bei denen die CD-Informationsschicht und die DVD-Informationsschicht von derselben Oberfläche des Datenträgers aus gelesen werden, hierzu wird nur beispielhaft verwiesen auf die bereits erwähnte EP 0737966 A, EP 0 520 619 A, US 4, 450, 553, EP 0 886 269 A, PCT/FR 97/01090 und EP 0720159 A. Bei diesen vorbekannten Datenträgern befindet sich die DVD-Informationsschicht etwa 0,6 mm unter der Leseoberfläche, die CD-Informationsschicht befindet sich etwa 1,2 mm unter der selben Leseoberfläche. Dies führt zu Problemen beim Abspielen in einem DVD-Abspielgerät. Bekanntlich sind DVD-Abspielgeräte in der Lage, auch CD-Informationen zu erfassen, sie sind nach unten kompatibel. Diese Geräte müssen nun erkennen können, ob sie die DVD-Informationsschicht oder die CD-Informationsschicht lesen sollen. Von Hause aus können sie beide Schichten lesen. Welche Schicht sie lesen sollen wird ihnen durch die Informationsspur, auch Einleitungsspur genannt (lead-in), mitgeteilt. Auf der Leseoberfläche ist es aber nun nicht möglich, eine oder zwei Informationsspuren aufzubringen, die eindeutig eine Zuordnung sowohl für CD- als auch für DVD-Abspielgeräte ermöglichen. Außerdem müsste ein DVD-Abspielgerät dem Benutzter eine Wahlmöglichkeit anbieten, ob er nun die DVD-Informationsschicht oder die CD-Informationsschicht erfassen lassen möchte.

Bei den Hybrid-DVD-CDs der eingangs genannten Art besteht dieses Problem nicht. Hier stehen beide Oberflächen für jeweils eine Informationsspur zur Verfügung. Wenn die CD-Information der Hybrid-DVD-CD mit einem DVD-Abspielgerät erfasst werden soll, erfasst dieses zuvor die Informationsspur, die für herkömmliche CD-Abspielgeräte ausgelegt ist und erkennt diese. Dadurch ist eine eindeutige Zuordnung gegeben. Dies hat bei dem erfindungsgemäßen Datenträger den Vorteil, dass das DVD-Abspielgerät sich nicht auf die Rückseite der DVD-Informationsschicht einstellt, obwohl diese Schicht etwa 0,6 mm unterhalb der ersten Scheibenfläche liegt und dadurch in der Entfernung vorliegt, die normgerecht ist und in der ein DVD-Abspielgerät eine DVD-Information erwartet.

Die Erfindung hat den Vorteil, dass eine Gesamtdicke des Datenträgers von 1,2 mm besonders optimal ist. Hierdurch soll nicht ausgesagt werden, das Gesamtdicken im Bereich um 1,2 mm nicht auch günstig sind. Bei einer Gesamtdicke von etwa 1,2 mm ist der Abstand zwischen der CD-Informationsschicht und der DVD-Informationsschicht möglichst groß. Dadurch ist das Leselicht beim Lesen der einen Schicht am Ort der zweiten Schicht möglichst wenig fokussiert. Die Störungen durch die zweite Schicht sind also so gering wie im Rahmen des Aufbaus möglich ist. Eine Gesamtdicke von 1,5 mm ist aber der Standard für CDs und DVDs. Zwar darf die Gesamtdicke, wie schon erwähnt wurde, innerhalb der Norm bis zu 1,2 mm betragen, es gibt aber Mehrfachplattenwechsler die auf 1,2 mm dicke Datenträger ausgelegt sind. Zudem spart man Material, in diesem Fall insbesondere Polycarbonat.

Weitere Vorteile und Merkmale der Erfindung ergeben sich aus den übrigen Ansprüchen, sowie der nun folgenden Beschreibung von Ausführungsbeispielen der Erfindung, die unter die Bezugnahme auf die Zeichnung im Folgendem näher erläutert werden. In dieser Zeichnung zeigen:
- Fig. 1:: Ein Schnittbild durch den Datenträger und entlang eines kurzen Stücks einer Informationsspur,
- Fig. 2:: ein Schnittbild wie Figur 1, jedoch für eine primäre Lage, die je eine Informationsspur auf je einer ihrer beiden Oberflächen enthält,
- Fig. 3:: eine Darstellung entsprechend Figur 2, jedoch nunmehr mit Reflektionsschichten auf den Oberflächen.

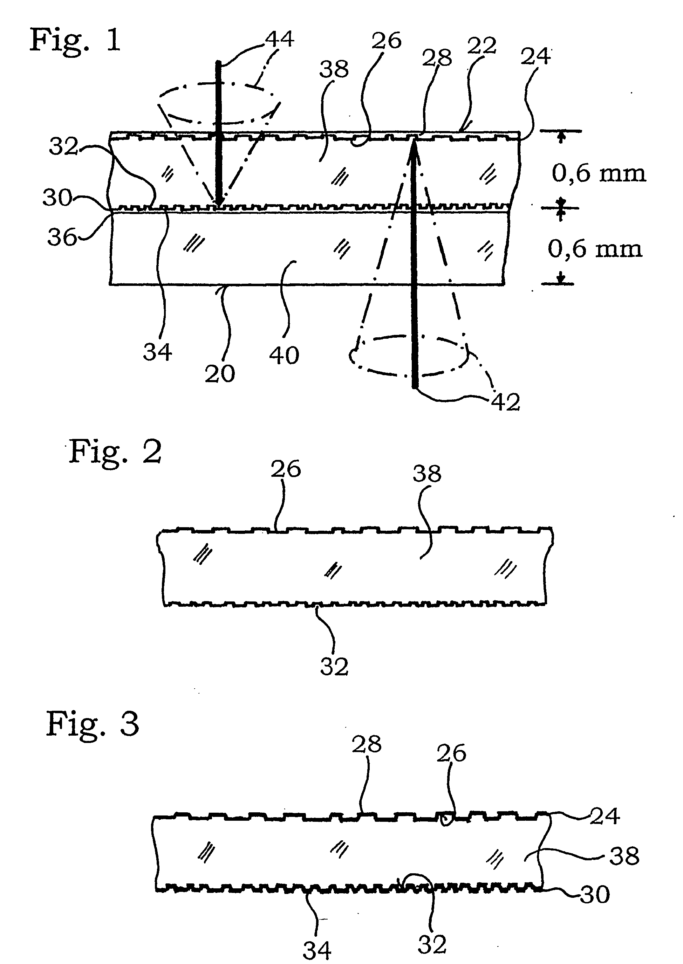

Der scheibenförmige Datenträger hat typischerweise einen Durchmesser von 12 cm, er kann beispielsweise aber auch einen Durchschnitt von 8 cm haben. Er ist nach der Norm für DVDs bzw. CDs gefertigt, hat ein zentrales Loch (nicht dargestellt) und Einleitungsspuren. Er hat eine erste Oberfläche 20, die in Figur 1 unten liegt. Er hat weiterhin eine zweite Oberfläche 22. Beide Oberflächen haben einen Abstand von 1,2 mm. Der Abstand kann zwischen 0,9 und 1,5 mm liegen, vorzugsweise ist er im Bereich zwischen 1,1 und 1,3 mm. Die Oberflächen 20, 22 sind in bekannter Weise völlig glatt.

Der Datenträger ist aus einem Kunststoff, beispielsweise Polycarbonat, hergestellt und setzt sich aus mehreren Lagen bzw. Scheiben zusammen, worauf später noch eingegangen wird. Er hat eine CD-Informationsschicht 24, die sich in unmittelbarer Nähe der zweiten Oberfläche 22 befindet. Diese CD-Informationsschicht weist eine CD-Pitstruktur 26 und eine CD-Reflektionsschicht 28 auf. In bekannter Weise sind die Pits eingeprägt in Land, die Pits sind von der ersten Oberfläche 20 weiter entfernt als Land.

Weiterhin hat der Datenträger eine DVD-Informationsschicht 30, die sich etwa in der Mitte zwischen der ersten Oberfläche 20 und der zweiten Oberfläche 22 befindet. Auch diese hat eine DVD-Pitstruktur 32 und eine DVD-Reflektionsschicht 34. Diese sind nach dem DVD-Standard ausgebildet. Die DVD-Pitstruktur 32 ist feiner, also kleiner als die CD-Pitstruktur 26, dies ist in den Figuren durch unterschiedliche Größen der Rechteckkurven für die Pitstrukturen kenntlich gemacht. Die DVD-Pits befinden sich, gesehen von der zweiten Oberfläche 22, unterhalb der zugehörigen Bereiche von Land. Mithin weisen die Pits der beiden Pitstrukturen 26, 32 aufeinander zu und weisen die Bereiche von Land dieser Pitstrukturen 26, 32 voneinander weg.

Figur 1 ist so weit wie möglich maßstabsgetreu erstellt. Allerdings ist der Abstand zwischen den Pits und Land übertrieben groß gezeichnet, um überhaupt diesen Abstand darstellen zu können. In der Wirklichkeit ist der Abstand geringer als die Liniendicke.

In unmittelbarer Nähe der DVD-Informationsschicht 30 befindet sich ein Verbindungsbereich 36, der so transparent wie möglich und so dünn wie möglich ausgeführt ist. Er trägt zur Gesamtdicke praktisch nicht bei. Im Verbindungsbereich findet ein "bonding" statt, wie es für DVDs grundsätzlich bekannt ist.

Der Datenträger nach Figur 1 besteht im wesentlichen aus einer primären Lage 38 bzw. Scheibe, die auf ihrer einen Scheibenfläche die DVD-Informationsschicht 30, auf der anderen Scheibenfläche die CD-Informationsschicht 24 trägt, sowie aus einer sekundären Lage 40 bzw. Scheibe. Beide sind etwa 0,6 mm dick, sodass die Gesamtdicke 1,2 mm beträgt. Die sekundäre Lage 40 ist eine Scheibe ohne besondere Merkmale, sie trägt keine Informationsschichten. Sie ist so ausgebildet, wie die zweite Scheibe bei einer DVD-5. Sie bildet die erste Oberfläche 20 aus.

Figur 1 zeigt auch, wie die beiden Informationsschichten 24, 30, auch Informationsebenen genannt, gelesen werden. Für diesen Vorgang werden handelsübliche Abspielgeräte eingesetzt. Es soll hier besonders betont werden, dass es nicht notwendig ist, spezielle Lesegeräte einzusetzen, vielmehr kann der Datenträger mit jedem normalen CD-Abspielgerät und auch mit jedem normalen DVD-Abspielgerät genutzt werden.

Üblicherweise wird der Datenträger in einem Abspielgerät von unten abgetastet, dies zeigt Figur 1 für den Fall des Lesens der CD-Informationsschicht 24. CD-Leselicht 42 tritt entlang eines Hauptstrahls, der dick gezeichnet ist, durch die erste Oberfläche 20, in den Datenträger ein. Es durchtritt die DVD-Informationsschicht 30 und gelangt auf die CD-Informationsschicht 24, dort wird das Leselicht fokussiert in einem möglichst kleinen Bereich bzw. Punkt. Nach Reflektion an der CD-Reflektionsschicht 28 nimmt das CD-Leselicht 42 den selben Weg wieder zurück. Rund um den Hauptstrahl ist strichpunktförmig der tatsächliche, etwa kegelförmige Lichtverlauf eingezeichnet. Man erkennt, dass das CD-Leselicht 42 im Bereich der DVD-Informationsschicht 30 nun auch relativ breit ist. Reflektionen an dieser Schicht finden zwar statt, sind aber in der Intensität gering und laufen nicht zurück, gelangen also nicht in spürbarem Maße in den Lichtempfangsteil des Abspielgerätes.

Will man die DVD-Informationsschicht 30 lesen, wird der Datenträger in ein DVD-Abspielgerät eingelegt. Hierzu wird er so gedreht, dass das Ablesen nun wieder von unten erfolgt. Lediglich zur Vereinfachung der Darstellung ist das DVD-Leselicht 44 in Figur 1 so eingezeichnet, dass es von oben kommt. In Wirklichkeit kommt es üblicherweise von unten.

Das DVD-Leselicht tritt durch die zweite Oberfläche 22 in den Datenträger ein. Es durchtritt die in unmittelbarer Nähe der zweiten Oberfläche befindlich CD-Informationsschicht und wird an der Stelle der DVD-Informationsschicht 30 zu einem möglichst kleinen Bereich bzw. Punkt fokussiert, wie dies Figur 1 auch zeigt. Nach Reflektion an der DVD-Reflektionsschicht 34 läuft das Licht wieder den selben Weg zurück. Für das DVD-Leselicht 44 ist stark ausgezogen der Hauptstrahl und strichpunktiert der Lichtkegel eingezeichnet, in dem die Lichtausbreitung stattfindet. Man erkennt, dass im Bereich der CD-Informationsschicht 24 das Leselicht relativ unfokussiert ist. Lokale Reflektionen haben also eine geringe Intensität. Ausserdem laufen sie nicht in dem Strahlengang des DVD-Leselichtes 44 zurück.

Insgesamt schwächt der Durchlauf durch die jeweils andere Informationsschicht die Intensität des jeweiligen Leselichtes, die jeweils andere Informationsschicht stört aber ansonsten beim Lesevorgang nicht.

Anhand der Figuren 2 und 3 wird nun eine mögliche Form der Herstellung des Datenträgers erläutert: Zunächst wird eine primäre Lage bzw. Scheibe 38 gefertigt. Sie ähnelt stark einer halben DVD und wird auch sie diese im Spritzverfahren aus Kunststoff, insbesondere Polycarbonat, hergestellt. Sie hat allerdings zusätzlich auf ihrer zweiten Oberfläche eine CD-Pitstruktur 26. Auf ihrer anderen Oberfläche hat sie die DVD-Pitstruktur 32.

In einem nächsten Arbeitsschritt werden die Pitstrukturen 26, 32 nun mit einer jeweils zugehörigen Reflektionsschicht 28, 34 belegt. Hierfür kommen insbesondere semitransparente Reflektionsschichten infrage, wie sie auch bei der DVD-9 für den Layer 0 verwendet werden, also beispielsweise 18 nm dicke Schichten aus Gold oder Silizium. Möglich sind auch etwa 10 nm dicke Schichten aus Aluminium. Es sind auch größere Schichtstärken und/oder andere Materialien möglich. Die Reflektionsschicht wird gerade so dick ausgebildet, dass ein ausreichendes Reflektionsvermögen für das Leselicht erreicht wird, das Leselicht der anderen Gattung aber möglichst wenig abgeschwächt wird.

Die bisher erwähnten Reflektionsschichten haben im wesentlichen ein Absorptionsvermögen und ein Reflektionsvermögen, das im Bereich der Wellenlängen der hier betrachteten Leselichte (im Wesentlichen 535-780 nm) unabhängig von der Wellenlängen ist. Es ist nun aber auch möglich, wellenlängen abhängige Reflektionsschichten auszuführen. Es wird ein Filter oder eine Farbschicht verwendet, hierzu wird auf die Offenbarung in der bereits genannten EP 0 886 269 A verwiesen. Weiterhin sind in der PCT/FR 97/01090 Reflektionsschichten angegeben die halbdurchlässig sind. Sie sind beispielsweise aus Polydiacetylen oder dergleichen gefertigt. Auf die konkrete Offenbarung in dieser Schrift wird ausdrücklich bezug genommen. Durch Einstellen der Dicke der Schicht kann die Transmission und Reflektion wellenlängenabhängig eingestellt werden, hierzu wird z.B. auf die Figuren 3 und 6 dieser Schrift Bezug genommen.

Die CD-Reflektionsschicht 28 hat vorzugsweise ein möglichst hohes Reflektionsvermögen für CD-Leselicht 42, also Licht mit einer Wellenlänge im Bereich etwa plus/minus 20 nm um 780 nm und eine möglichst hohe Durchlässigkeit für DVD-Leselicht 44, also Licht im Bereich etwa plus/minus 20 nm um 635-650 nm. Entsprechendes gilt für die DVD-Reflektionsschicht.

Figur 3 zeigt die primäre Lage 38 aus Figur 2, die nunmehr auch mit einer CD-Reflektionsschicht 28 und einer DVD-Reflektionsschicht 34 belegt ist. Diese Reflektionsschichten sind ausgesprochen dünn, sie tragen also praktisch nicht zur Gesamtdicke bei.

In bekannter Weise wird die primäre Lage 38 nun mit einer sekundären Lage 40 verklebt, hierzu wird ein möglichst dünner UV-härtbarer Kleber verwendet, wie dies bei der Herstellung von DVDs Stand der Technik ist. Die CD-Informationsschicht 24 wird durch einen Schutzlack abdeckt. Dies ist bei der CD-Herstellung an sich bekannt und ein gängiges Verfahren. Damit ist der Datenträger fertig gestellt.

In einer Alternative trägt die primäre Lage 38 nur die CD- Informationsschicht. Die DVD-Informationsschicht ist auf der Scheibenfläche der sekundären Lage 40 ausgebildet, die am Verbindungsbereich 36 anliegt. Sie ist invers ausgeführt im Vergleich zu einer üblichen DVD-Informationsschicht dieser Lage 40, da sie nicht von der Oberfläche 20 gelesen wird.

## Patentansprüche

1. Scheibenförmiger optischer Datenträger in Form einer zweiseitigen Hybrid-CD-DVD, der eine Gesamtdicke von nicht über 1,5 mm aufweist,
- mit einer ersten Oberfläche (20),
- mit einer zweiten Oberfläche (22),
- mit einer CD-Informationsschicht (24), auf der Daten nach dem CD-Standard gespeichert sind und die eine CD-Pitstruktur (26) und eine CD-Reflektionsschicht (28) aufweist und
- mit einer DVD-Informationsschicht (30), auf der Daten nach dem DVD-Standard gespeichert sind und die eine DVD-Pitstruktur (32) und eine DVD-Reflektionsschicht (34) aufweist,
- wobei ein erstes Leselicht (42), welches die CD-Informationsschicht (24) erfasst, durch die erste Oberfläche (20) in den Datenträger eintritt und ein zweites Leselicht (44), welches die DVD-Informationsschicht (30) liest, durch die zweite Oberfläche (22) in den Datenträger eintritt,
**dadurch gekennzeichnet, dass** sich die DVD-Informationsschicht (30) etwa in der Mitte zwischen der ersten und der zweiten Oberfläche (20, 22) befindet, dass sich die CD-Informationsschicht (24) in unmittelbarer Nähe der zweiten Oberfläche (22) befindet, dass CD-Leselicht (42), welches die CD-Informationsschicht (24) liest, durch die DVD-Informationsschicht (30) hindurchläuft, dass DVD-Leselicht (44), welches die DVD-Informationsschicht (30) liest, durch die CD-Informationsschicht (24) hindurchläuft, dass die CD-Informationsschicht (24) teilweise durchlässig ist für DVD-Leselicht (44), und dass die DVD-Informationsschicht (30) zumindest teilweise durchlässig ist für CD-Leselicht (42).

2. Datenträger nach Anspruch 1, **dadurch gekennzeichnet, dass** der Abstand der ersten Oberfläche (20) von der zweiten Oberfläche (22) zwischen 1,0 und 1,5 mm, vorzugsweise zwischen 1,1 und 1,3 mm liegt.

3. Datenträger nach Anspruch 1, **dadurch gekennzeichnet, dass** die CD-Reflektionsschicht (28) ein möglichst hohes Reflektionsvermögen hat für Licht mit einer Wellenlänge im Bereich um 780 nm und dass sie eine möglichst große Durchlässigkeit hat für Licht mit einer Wellenlänge im Bereich um 635-650 nm.

4. Scheibenförmiger optischer Datenträger nach Anspruch 1, **dadurch gekennzeichnet, dass** der Datenträger aus mehreren scheibenförmigen, miteinander verklebten Lagen (38, 40) steht und dass Verbindungsbereiche (36) zwischen benachbarten Lagen (38, 40) optisch so durchlässig wie möglich ausgeführt sind.

5. Scheibenförmiger optischer Datenträger nach Anspruch 4, **dadurch gekennzeichnet, dass** die Verbindungsbereiche (36) so dünn wie möglich ausgeführt sind.

6. Scheibenförmiger optischer Datenträger, nach Anspruch 1, **dadurch gekennzeichnet, dass** die DVD-Informationsschicht (30) so ausgeführt ist, wie diejenige einer ersten Informationsschicht (Layer 0) einer DVD nach dem DVD-9 Standard, die der Eintrittsoberfläche näher liegt, als die zweite, tiefliegende Informationsschicht.

## Claims

1. Disk-shaped optical data carrier in the form of a double-sided hybrid-CD-DVD having a total thickness of not higher than 1,5 mm,
- with a first surface (20),
- with a second surface (22),
- with a CD information layer (24), on which CD-standard data is stored, and which has a CD pit structure (26) and a CD reflection layer (28),
- with a DVD information layer (30), on which DVD-standard data is stored, and which has a DVD pit structure (32) and a DVD reflection layer (34)
- whereby a first reading light (42), which captures the CD information layer (24), enters the data carrier through the first surface (20), and a second reading light (44), which reads the DVD information layer (30), enters the data carrier through the second surface (22),
**characterized by** the fact that the DVD information layer (30) is approximately in the middle between first and the second surface (20, 22), that the CD information layer (24) is located in direct proximity of the second surface (22), that CD reading light (42), which reads the CD information layer (24), travels through the DVD information layer (30), that the DVD reading light (44), which reads the DVD information layer (30) travels through the CD information layer (24), that the CD information layer (24) is partially transparent with respect to DVD reading light (44) and the DVD information layer (30) is at least partially transparent with regard to CD reading light (42).

2. Data carrier according to claim 1, **characterized by** the fact that the distance of the first surface (20) from the second surface (22) lies between 1.0 and 1.5 mm, preferably between 1.1 and 1.3 mm.

3. Data carrier according to claim 1, **characterized by** the fact that the CD reflection layer (28) has as high a reflection ability as possible for light with a wavelength within the range around 780 nm and that it has as large a transparency as possible for light with a wavelength within the range around 635-650 nm.

4. Disk-shaped optical data carrier according to claim 1, **characterized by** the fact that the data carrier is comprised of several disk-shaped substrates (38, 40), which are glued to one another, and that connecting ranges (36) between neighboring substrates (38, 40) are implemented optically as permeable as possible.

5. Disk-shaped optical data carrier according to claim 4, **characterized by** the fact that the connecting ranges (36) are implemented to be as thin as possible.

6. Disk-shaped optical data carrier according to claim 1, **characterized by** the fact that the DVD information layer (30) is implemented in a way as a first information layer (Layer 0) of a DVD according to the DVD-9 standard and which is closer to the entrance surface, as the second, deeper located information layer.

## Revendications

1. Support de données optique sous forme de disque hybride CD-DVD à deux faces d'une épaisseur totale ne dépassant pas 1,5 mm,
- avec une première surface (20),
- avec une deuxième surface (22),
- avec une couche d'informations CD (24) sur laquelle des données sont stockées au format CD et qui comporte une structure de creux CD (26) et une couche réfléchissante CD (28) et
- avec une couche d'informations DVD (30) sur laquelle des données sont stockées au format DVD et qui comporte une structure de creux DVD (32) et une couche réfléchissante DVD (34),
- une première lumière de lecture (42) de la couche d'informations CD (24) traversant la première surface (20) pour pénétrer dans le support de données et une deuxième lumière de lecture (44) de la couche d'informations DVD traversant la deuxième surface (22) pour pénétrer dans le support de données,
**caractérisé en ce que** la couche d'informations DVD (30) se situe environ au centre entre la première et la deuxième surface (20, 22), que la couche d'informations CD (24) se situe à proximité immédiate de la deuxième surface (22), que la lumière de lecture CD (42) de la couche d'informations CD (24) traverse la couche d'informations DVD (30), que la lumière de lecture DVD (44) de la couche d'informations DVD (30) traverse la couche d'informations CD (24), que la couche d'informations CD (24) laisse en partie passer la lumière de lecture DVD (44) et que la couche d'informations DVD (30) laisse passer du moins en partie la lumière de lecture CD (42).

2. Support de données selon la revendication 1, **caractérisé en ce que** la distance séparant la première surface (20) de la deuxième surface (22) est comprise entre 1,0 et 1,5 mm, de préférence entre 1,1 et 1,3 mm.

3. Support de données selon la revendication 1, **caractérisé en ce que** la couche réfléchissante CD (28) a un pouvoir réfléchissant de lumière d'une longueur d'onde de l'ordre de 780 nm le plus grand possible et qu'elle laisse passer un maximum de lumière d'une longueur d'onde comprise entre 635-650 nm environ.

4. Support de données optique en forme de disque selon la revendication 1, **caractérisé en ce que** le support de données est constitué de plusieurs couches (38, 40) en forme de disque collées ensemble et que les zones de jonction (36) entre les couches voisines (38, 40) sont réalisées de manière à être optiquement parlant aussi transparentes que possible.

5. Support de données optique en forme de disque selon la revendication 4, **caractérisé en ce que** les zones de jonction (36) sont réalisées de manière à être aussi minces que possible.

6. Support de données optique en forme de disque selon la revendication 1, **caractérisé en ce que** la couche d'informations DVD (30) est réalisée comme celle d'une première couche d'informations (layer 0) d'un DVD du type DVD-9, celle-ci se situant plus près de la surface de pénétration que la deuxième couche d'informations, située plus en profondeur.
